# Europäisches Patentamt
# European Patent Office
# Office européen des brevets

(19)

(11) Veröffentlichungsnummer: **0 005 533**
A2

(12)
## EUROPÄISCHE PATENTANMELDUNG

(21) Anmeldenummer: **79101476.4**

(22) Anmeldetag: **14.05.79**

(51) Int. Cl.²: **C 08 G 8/04**
**C 08 L 97/02**

(30) Priorität: **16.05.78 DE 2821294**

(43) Veröffentlichungstag der Anmeldung:
**28.11.79 Patentblatt 79/24**

(84) Benannte Vertragsstaaten:
**AT BE CH FR GB NL SE**

(71) Anmelder: **DEUTSCHE TEXACO**
**AKTIENGESELLSCHAFT**
**Überseering 40**
**D-2000 Hamburg 60(DE)**

(72) Erfinder: **Heinemann, Karl-Heinz, Dr.**
**Gartenstrasse 47**
**D-4133 Neukirchen-Vluyn(DE)**

(72) Erfinder: **Michalczyk, Georg, Dr.**
**Inneboltstrasse 30**
**D-4133 Neukirchen-Vluyn(DE)**

(72) Erfinder: **Ripkens, Gerd**
**Wiesenbruchstrasse 27**
**D-4132 Kamp-Lintfort(DE)**

(74) Vertreter: **Schupfner, Gerhard, Dr.**
**Kirchenstrasse 8**
**D-2110 Buchholz i.d.N.(DE)**

(54) Phenolaldehydharz, Verfahren zu seiner Herstellung und seiner Verwendung.

(57) Phenolaldehydharze mit verbesserter Biegefestigkeit werden durch alkalische Kondensation von gegebenenfalls mit niederen Alkylgruppen substituiertem Phenol, Formaldehyd und Isobutyraldehyd hergestellt. Sie sind insbesondere als Bindemittel zur Herstellung von Holzwerkstoffen geeignet.

EP 0 005 533 A2

0005533

Dr. Gerhard Schupfner
Patentanwalt
Kirchenstr. 8
D 2110 Buchholz/Nordheide

12. Mai 1979

D 78 003 EP

## PHENOLALDEHYDHARZ, VERFAHREN ZU SEINER HERSTELLUNG UND SEINE VERWENDUNG

Die Erfindung betrifft ein Phenolaldehydharz, das insbesondere als Bindemittel zur Herstellung von Holzwerkstoffen, wie Holzfaserplatten und Holzspanplatten, geeignet ist.

Für die Herstellung von Holzwerkstoffen wie Faser- und Spanplatten werden bevorzugt alkalisch kondensierte Phenol-Formaldehyd-Harze als Bindemittel eingesetzt, weil sie im Vergleich zu Harnstoff- und Melamin-Harzen nur sehr wenig Formaldehyd abspalten und den fertigen Platten sehr gute mechanische Eigenschaften, insbesondere Wasser- und Wetterfestigkeit verleihen. Insbesondere für die Herstellung von nachverformbaren Hartfaserplatten, die im Bausektor, in der Automobilindustrie sowie für den Möbel- und Innenbausektor benötigt werden, werden daher vornehmlich Phenol-Formaldehyd-Harze als Bindemittel eingesetzt.

Die Herstellung von Holzwerkstoffen, wie Faserplatten, erfolgt in der Weise, daß man das Bindemittel in Form einer wäßrigen Lösung auf die Fasern oder Späne aufbringt und durch Zusatz von Mineralsäure oder Aluminiumsulfat den pH-Wert auf etwa 3 bis 4,5 bringt, wodurch das Harz aus der Lösung ausfällt und auf die Fasern

...

aufzieht. Die so beleimten Fasern werden dann in der Presse bei erhöhter Temperatur zu Platten der gewünschten Größe und Dicke verpreßt.

Als Qualitätsmerkmal für die als Bindemittel eingesetzten Harze werden

1. die Biegefestigkeit der damit hergestellten Platten nach dem Pressen und der Klimatisierung und vor einer eventuellen Nachhärtung und

2. der Biegefestigkeitsverlust nach der Wässerung (Lagerung für 3 min in 90° heißem Wasser)

herangezogen.

Der Erfindung liegt die Aufgabe zugrunde, ein Phenolharz zu schaffen, mit dem sich Holzwerkstoffe mit verbesserter Biegefestigkeit und verringertem Biegefestigkeitsverlust nach dem Wässern herstellen lassen.
In Lösung dieser Aufgabe wird ein Phenolaldehydharz bereitgestellt, hergestellt durch Kondensieren von gegebenenfalls mit niederen Alkylgruppen substituiertem Phenol mit Formaldehyd und Isobutyraldehyd in Gegenwart von Alkali im Molverhältnis Phenol : Aldehyd : Alkali von 1 : 1,52 bis 1,62 : 0,50 bis 1,30, wobei 0,05 bis 0,4 Mol Isobutyraldehyd, bezogen auf 1 Mol Phenol, eingesetzt sind.
Es ist somit völlig überraschend gefunden worden, daß sich die gestellte Aufgabe lösen läßt, wenn man einen gewissen Teil des Formaldehyds gegen Isobutyraldehyd austauscht. In der Praxis werden Phenolharze durchweg mit Formaldehyd als aldehydische Komponente hergestellt. In der Literatur findet man zwar gelegentlich Hinweise darauf, daß der Formaldehyd auch durch andere Aldehyde, wie Acetaldehyd oder Propionaldehyd ersetzt werden kann, doch war man der Ansicht, daß die Struktur des Aldehyds im Vergleich zur Phenolkomponente von geringerem Einfluß auf die Harzeigenschaften ist. Nur in Verbindung mit sauren Katalysatoren, also bei der Herstellung von

...

Novolaken, sind höhere Aldehyde von gewissem Interesse; so ersetzt man Formaldehyd durch Acetaldehyd, wenn lösliche, schmelzbare Harze erwünscht sind. Erwähnt sei in diesem Zusammenhang die DE-OS 26 05 482. Aus ihr ist ein Isobutyraldehyd-Phenol-Harz bekannt, das in Gegenwart eines stark sauren Katalysators kondensiert worden ist und als Klebrigmacher für Kautschuk empfohlen wird. Da die höheren Aldehyde in Gegenwart alkalischer Katalysatoren eine geringe Reaktivität besitzen, unerwünschte Nebenreaktionen geben und teuer sind, gibt man Formaldehyd vor anderen Aldehyden den Vorzug (siehe Kirk Othmer "Encyclopedia of Chem. Techn." 1953, Vol. 10, S. 339).

Es war daher nicht voraussehbar, daß Isobutyraldehyd, in alkalisch kondensierte Phenol-Formaldehyd-Harze einkondensiert, einen günstigen Einfluß auf die Eigenschaften des gehärteten Produkts haben würde. Es ist gefunden worden, daß bei einem Austausch von 0,05 bis 0,4, vorzugsweise 0,08 bis 0,18 Mol Formaldehyd, bezogen auf 1 Mol Phenol, durch Isobutyraldehyd, das sind 3 bis 25, vorzugsweise 5 bis 11 Gew.% der 37-Gew.%igen wäßrigen Formaldehydlösung, die Biegefestigkeit der mit einem solchen Phenolharz hergestellten Holzfaserplatten erheblich verbessert und der Biegeverlust nach Wässerung überraschend gering ist. Tauscht man weniger als 3 Gew.% der 37 Gew.%igen wäßrigen Formaldehydlösung durch Isobutyraldehyd aus, so ist die Verbesserung der oben genannten Eigenschaften entsprechend geringer; erhöht man dagegen den Isobutyraldehydanteil auf über 25 Gew.%, so werden längere Härtungszeiten erforderlich, was die Herstellung der Platten unwirtschaftlich macht.

Aus der nachstehenden Tabelle sind bevorzugte Zusammensetzungen zu ersehen:

Molverhältnis

| bei einem Iso-<br>butyraldehydanteil<br>der 37 Gew.%igen<br>wäßrigen Formalde-<br>hydlösung von: | Phenol : | Formal-<br>dehyd | : | Isobutyral-<br>dehyd |
|---|---|---|---|---|
| 5 Gew.% | 1 · | : 1,44 | : | 0,08 |
| 8 Gew.% | 1 | : 1,44 | : | 0,13 |
| 11 Gew.% | 1 | : 1,44 | : | 0,18 |

bei einem NaOH-Gehalt von 0,5, 0,795, 1,30 Mol je 1 Mol Phenol. Anstelle des reinen Phenols kann auch ein mit niederen Alkylgruppen ($C_1$ - $C_4$) substituiertes Phenol, wie ein Kresol, eingesetzt werden, doch wird Phenol aus wirtschaftlichen Gründen bevorzugt. Als Härter dient vorzugsweise ein Alkalihydroxid, wie Kalilauge und Natronlauge. Der Formaldehyd wird am besten in Form einer handelsüblichen 37%igen wäßrigen Lösung eingesetzt.

Die Herstellung des Harzes erfolgt in an sich bekannter Weise, indem man die Monomeren in wäßriger Lösung auf 60 bis 80° C erhitzt und das Alkali als 45- bis 55-Gew.%-ige Alkalilaugelösung so langsam zugibt, daß die Temperatur nicht wesentlich steigt. Wenn die gesamte Lauge zugegeben ist, steigert man die Temperatur bis nahe an den Siedepunkt und läßt so lange weiterkondensieren, bis das Harz die gewünschte Viskosität entsprechend einer Auslaufzeit von 30 bis 40 s aus dem 4-mm-DIN-Becher bei 20° C und einem Feststoffgehalt von 38 bis 42, vorzugsweise 40 Gew.%, hat.

Die Verwendung dieses Phenolharzes zur Herstellung von Holzfaserplatten erfolgt ebenfalls in üblicher Weise. Man verdünnt das Harz auf einen Feststoffgehalt von ca. 15 bis 25 Gew.% mit Wasser, am besten Prozeßwasser, setzt der Lösung eine Paraffinemulsion als Hydrophobierungsmittel zu und bringt die Harzlösung auf die Fasern

...

auf. Geeignet sind insbesondere Fasern aus Tannen- und Kiefernholz. Das Beleimen kann nach irgendeiner der bekannten Methoden vorgenommen werden, wie Zugeben in der Büttezum Faserbrei, Aufsprühen des Harzes auf die bewegten Fasern. Danach bringt man den pH auf einen Wert von 3,0 bis 4,5, vorzugsweise 4,0 bis 4,5, durch Zugeben einer Mineralsäure oder Aluminiumsulfat, wodurch das Harz ausgefällt wird und auf die Fasern aufzieht.

Der geleimte Faserbrei wird dann in der Presse zu Platten der gewünschten Größe verpreßt. Preßdruck und Temperatur hängen von der Dicke der Platten und dem Wassergehalt des Leimes und der Fasern ab. Vorzugsweise wird in zwei Druckphasen gehärtet, einer kürzeren Hochdruckphase (Pressendruck 250 bis 270 bar) und einer Niederdruckphase (Pressendruck 50 bis 70 bar). Die Temperatur liegt bei etwa 180 bis 220° C.

Die Biegefestigkeit, die Aufschluß über die Formbeständigkeit von Holzplatten unter Belastung gibt, wird nach DIN-Vorschrift 52 362 bestimmt. Danach werden Biegeprüfstäbe aus den fertig gehärteten Platten geschnitten. Die Stäbe werden als freiliegender Balken auf zwei Stützen in der Mitte zwischen den Stützen bis zum Bruch belastet. Der Biegeverlust wird ermittelt, indem man die Stäbe aus den gleichen Platten 3 min in 90° C heißem Wasser lagert, danach die Biegefestigkeit ermittelt; die Differenz zwischen der Biegefestigkeit vor der Wässerung und nach der Wässerung ist der Biegeverlust.

Der mit der Erfindung erzielte technische Fortschritt wird anhand der folgenden Beispiele gezeigt:

1. Herstellung des Harzes nach der Erfindung
   In ein mit Rührer versehenes Reaktionsgefäß wurden 244 kg Phenol, 303 kg 37%ige wäßrige Formaldehydlösung, 24 kg Isobutyraldehyd und 270 kg Wasser gegeben.(Molverhältnis Phenol : Formaldehyd : Iso-

...

butyraldehyd : NaOH 1 : 1,44 : 0,13 : 0,795). Das Ganze wurde unter Rühren auf 70° C erhitzt und dann die 50 Gew.%ige wäßrige Natronlauge, insgesamt 165 kg, so langsam zugegeben, daß die Temperatur nicht wesentlich ansteigt. Die Zugabe war nach 2 h beendet. Dann wurde auf 95° C erhitzt und bis zu einer Auslaufzeit von 25 s aus dem 4-mm-DIN-Becher bei 20° C (nach DIN 53 211) kondensiert.

2. Herstellung von Holzfaserplatten mit dem nach 1. erhaltenen Harz

Das Phenolharz wurde mit Prozeßwasser auf 20 Gew.% verdünnt und zusammen mit einer Paraffinemulsion (ca. 50 Gew.% Paraffin in Wasser emulgiert) den Fasern aus Tannenholz zugesetzt und durch Einstellen des pH-Wertes der Flotte auf 4,4 durch Zusatz von Aluminiumsulfat ausgefällt. Bei einem Harzdurchsatz von 0,49 t/h, einem Paraffinemulsionsdurchsatz von 0,195 t/h und einem Faserdurchsatz von 6,5 t/h resultierte ein Harzgehalt von 2,5 Gew.% (bezogen auf fällbaren Harzanteil) und 1,5 Gew.% Paraffin in den trockenen Faserplatten. Die so beleimten Fasern wurden bei einer Temperatur von 175° C und einem Pressendruck von 265 bar ca. 1 min und bei einem Pressendruck von 59 bar ca. 2 min zu Platten verpreßt.

Die Biegefestigkeit sowie der Biegeverlust nach der Wässerung wurden an Probestäben aus den erhaltenen Platten bestimmt. Im Vergleich dazu wurden die gleichen Prüfungen an Probestäben aus Platten, die mit einem im Handel erhältlichen Holzbindemittel hergestellt worden sind, durchgeführt. Dieses Bindemittel war ein Phenol-Formaldehyd-Harz, erhalten durch Kondensieren von Phenol und Formaldehyd in Gegenwart von Alkali im Molverhältnis 1 : 1,57 : 0,77.

...

0005533

| Platten hergestellt mit | Biegefestig-keit (nach DIN 52 362) N/mm$^2$ | Biege-verlust |
|---|---|---|
| Harz nach dem Stand der Technik | 45,2 | 29,4 |
| erfindungsgemäßem Harz bezogen auf 1 Mol Phenol | | |
| mit 0,05 Mol Isobutyral-dehyd hergestellt gemäß Beispiel 1 | 50,3 | 17,6 |
| mit 0,13 Mol Isobutyral-dehyd hergestellt gemäß Beispiel 1 | 66,8 | 9,8 |
| mit 0,18 Mol Isobutyral-dehyd hergestellt gemäß Beispiel 1 | 73,0 | 9,0 |
| mit 0,4 Mol Isobutyral-dehyd hergestellt gemäß Beispiel 1 | 79,2 | 8,3 |

0005533

Dr. Gerhard Schupfner
Patentanwalt
Kirchenstr. 8
D 2110 Buchholz/Nordheide

12. Mai 1979

D 78 003 EP

P a t e n t a n s p r ü c h e

1. Phenolaldehydharz, hergestellt durch Kondensieren von gegebenenfalls mit niederen Alkylgruppen substituiertem Phenol mit Formaldehyd und Isobutyraldehyd in Gegenwart von Alkali im Molverhältnis Phenol : Aldehyd : Alkali von 1 : 1,52 bis 1,62 : 0,50 bis 1,30, wobei 0,05 bis 0,4 Mol Isobutyraldehyd, bezogen auf 1 Mol Phenol, eingesetzt sind.

2. Phenolharz nach Anspruch 1, hergestellt durch Kondensieren von Phenol, Formaldehyd und Isobutyraldehyd im Molverhältnis 1 : 1,44 : 0,08 bis 0,18.

3. Verfahren zur Herstellung des Phenolharzes nach einem der Ansprüche 1 oder 2 d a d u r c h g e k e n n - z e i c h n e t , daß das Phenol, Formaldehyd in Form einer ca. 37 %igen wäßrigen Lösung und Isobutyraldehyd in wäßriger Lösung unter Rühren auf 60 - 80° C erhitzt werden, dann das Alkali in Form einer 45 - 55 Gew.%igen Alkalilauge-Lösung langsam zulaufen gelassen, anschließend nahezu auf 100° C erhitzt und bei dieser Temperatur so lange gehalten wird, bis das Harz eine Viskosität entsprechend einer Auslaufzeit von 30 bis 50 s (aus dem 4-mm-DIN-Becher bei 20° C) und einen Feststoffgehalt von 38 bis 42 Gew.% aufweist, und daß das Molverhältnis Phenol : Aldehyd : Alkali 1 : 1,52 bis 1,62 : 0,50 bis 1,30 beträgt, wobei 0,05 bis 0,4 Mol Isobutyraldehyd, bezogen auf 1 Mol Phenol, eingesetzt sind.

4. Verwendung des Phenolharzes nach den Ansprüchen
   1 bis 3 als Bindemittel bei der Herstellung von
   Holzwerkstoffen.